# EUROPÄISCHE PATENTSCHRIFT

(11) **EP 1 741 511 B1**
(45) Veröffentlichungstag und Bekanntmachung des Hinweises auf die Patenterteilung: **05.03.2008**
(21) Anmeldenummer: 05014919.4
(22) Anmeldetag: 09.07.2005
(51) Int. Cl.: B23Q 1/00, B23Q 16/08

(54) **Spannvorrichtung für ein Werkzeug oder ein Werkstück**
Clamping device for a tool or a workpiece
Dispositif de serrage pour un outil ou une pièce à travailler

(43) Veröffentlichungstag der Anmeldung: 10.01.2007
(73) Patentinhaber: System 3R International AB, 162 50 Stockholm (SE)
(72) Erfinder: Casperson, Hans-Owe, 134 37 Gustavsberg (SE)
(74) Vertreter: Weiss, Wolfgang

(56) Entgegenhaltungen:
- DE-A1- 3 713 023
- DE-A1- 4 307 342
- US-A- 4 652 203
- US-A- 5 190 272
- US-A- 6 089 557

## Beschreibung

Die Erfindung betrifft eine Spannvorrichtung nach dem Oberbegriff von Anspruch 1.

Spannvorrichtungen dieser Gattung werden zum Einspannen von Werkstücken oder Werkzeugen verwendet, wobei beim Bearbeiten des Werkstückes sehr hohe Präzision gefordert ist. Darüber hinaus muss eine exakte wiederholbare Einspannung des Werkstückes oder des Werkzeuges in x-, y und z- Richtung gewährleistet sein.

Die US 6,089,557 (oder EP 0818270 A1) beschreibt eine derartige Aufspannvorrichtung für ein Werkzeug oder Werkstück. Diese Aufspannvorrichtung weist ein dem zu spannenden Werkzeug bzw. Werkstück zugewandtes Kupplungselement sowie ein ortsfest anzuordnendes Spannelement auf. Das Kupplungselement ist mit Nuten versehen, die zur Feinzentrierung und zur Bestimmung der Lage in X- und/oder Y- Richtung mit am Spannelement angeordneten Zentrierzapfen zusammenwirken. Am Spannelement ist zudem der für das gegenseitige Fixieren der beiden Elemente notwendige Spannbolzen angeordnet. Zum Schutz der für die Feinzentrierung wesentlichen Teile ist das Kupplungselement mit einem Abstützorgan versehen, welche die erwähnten Feinzentrierteile überragt.

Aus der EP-A-255 042 ist eine Spannvorrichtung beschrieben, wobei zur genauen Positionierung der beiden Kupplungsorgane (Spannfutter und Halter) zueinander in z- Richtung, die üblicherweise mit der Spannrichtung übereinstimmt, an einem der Kupplungsorgane mehrere Pfosten vorhanden und an deren freien Stirnflächen die z-Referenzflächen ausgebildet sind. Am anderen Kupplungsorgan befinden sich in den Pfosten entsprechender Anordnung mehrere z-Gegenreferenzflächen, welche in einer gemeinsamen Ebene liegen und beim Zusammenspannen mit den z-Referenzflächen zusammenwirken. Eine ähnliche Anordnung zur z-Positionierung zweier Kupplungsorgane ist aus dem deutschen Gebrauchsmuster DE-U-295 21 030 bekannt.

Eine andere Kupplungsvorrichtung mit zwei Kupplungsorganen und einer Spanneinrichtung ist in der EP 1 013 375 A2 offenbart. Beschrieben wird eine Kupplungsvorrichtung bestehend aus einem ersten Kupplungsorgan und einem zweiten Kupplungsorgan sowie einer Spanneinrichtung zum axialen Zusammenspannen der beiden Kupplungsorgane, wobei von dem ersten Kupplungsorgan wenigstens drei Prismenzapfen vorstehen, von denen jeder an wenigstens einer Seite mit einer Prismenfläche versehen ist und wobei an dem ersten Kupplungsorgan wenigstens drei beabstandete z-Referenzflächen ausgebildet sind, die in einer sich quer zur Spannrichtung erstreckenden x-y Ebene liegen, und wobei ferner das zweite Kupplungsorgan wenigstens drei auf die Prismenzapfen ausgerichtete Nuten aufweist, an denen axialelastische Elemente zur genauen Positionierung der Kupplungsorgane relativ zueinander in der x-y Ebene vorgesehen sind. Um die konstruktive Gestaltung der z-Positionierung zweier Kupplungsorgane zu vereinfachen, ist vorgesehen, dass die z-Referenzflächen an den freien Stirnflächen der Prismenzapfen und am Nutengrund jeder Nut eine z-Gegenreferenzfläche ausgebildet sind.

Im folgenden werden die Probleme und Nachteile beschrieben, die mit dem gegenwärtigen Stand der Technik verbunden sind.

Die bisherigen Spannvorrichtungen sind im allgemeinen nur für spezifische Anwendungen einsetzbar, so dass eine Vielzahl von Spannungsvorrichtungen erforderlich sind, um eine möglichst breites Spektrum von Anwendungen abzudecken. Beispielsweise werden für das Verfahren des Pulverpressens hohe Anforderungen an die Werkzeuge und deren Spannvorrichtungen gestellt, insbesondere eine hohe Kräftebelastung. Ferner wäre es von Vorteil, wenn eine Spannvorrichtung für verschiedene Bearbeitungsverfahren einsetzbar wären, z.B. beim Fräsen, Schleifen, EDM oder anderen Werkzeugmaschinen. Ebenso sollte die Spannvorrichtung für verschiedene Werkzeugformen (beispielsweise Elekroden- formen bei EDM) einsetzbar sein ohne zeitaufwendige Umrüstzeiten. Ein Problem ist, eine Lösung zu finden, sowohl die klein dimensionierten Halter als auch die grösser dimensionierten Halter mit Werkzeugen oder Werkstücken auf Werkstückplatten mittels einer universal konzipierten Spannvorrichtung zu verspannen.

Weiterhin besteht die Forderung, in dem für die Einspannung eines Werkzeuges (Bohrer, Elekrode etc.) vorgesehenen Kupplungsteil Raum zu schaffen, damit das Werkzeug genügend belastbar fest sitzt. Speziell bei Hochgeschwindigkeitsfräsmaschinen ist dieses Problem vom derzeitigen Stand der Technik nicht gelöst.

Weiterhin entsteht oftmals der Nachteil von unerwünschten Seitenkräften in der Verspannungsphase, verursacht von Verspannungskugeln oder anderen Spannungselementen.

Der Erfindung liegt somit die Aufgabe zugrunde, eine Spannungsvorrichtung vorzuschlagen, die diese oben genannten Nachteile beseitigt.

Erfindungsgemäss wird diese Aufgabe nach dem Kennzeichen von Anspruch 1 gelöst.

Das Merkmal, wonach der Halter zweiteilig aus einem oberen Teil und einem rohrförmigen Fortsatz aufgebaut ist, vermindert oder beseitigt die oben genannten Nachteile des Standes der Technik.

Der erfindungsgemässe zweiteilige Halter ist in einem an sich bekannten Spannfutter verwendbar sowie in einer aus zwei Spannfuttern zusammengesetzten Spannvorrichtung.

Durch die weitere erfindungsgemässe Ausführungsform von zwei konzentrischen Spannfuttern werden weitere Nachteile, wie sie im Stand der Technik auftreten, beseitigt. Erstens können sowohl kleine Halter mit Werkzeugen als auch grosse Halter mit Werkzeugplatten mittels dieses "Doppelspannfutters" Anwendung finden. Das innere und das äussere Spannfutter hat ähnliche oder identische x-y Referenzen. Die z-Referenzen sind in derselben Ebene oder nahezu in derselben Ebene angeordnet. Die x-y-z Koordinaten der beiden Spannfutter sind voll aufeinander abgestimmt. Die z- Koordinate des einen Spannfutters ist nahe der z- Koordinate des anderen Spannfutters angeordnet. Die beiden Spannfutter sind zueinander koaxial zu einer Einheit verbunden. Die beiden Spannfutter sind im verbundenen Zustand vollkommen zentrisch justiert. Es bedarf keiner separaten Justierung. Aufgrund dieser erfindungsgemässen Vorrichtung ist es möglich, Spannfutter mit wesentlich kleinerem Durchmesser als Spannfutter nach dem Stand der Technik herzustellen, in der Regel bis 25% kleiner.

Das innere Spannfutter weist im Zentrum eine durchgehende Öffnung auf. Dies gestattet die Aufnahme von Werkzeugen mit langem Verspannungszapfen. Die bisherigen zentralen Öffnungen in den Spannvorrichtungen dienten ausschliesslich als Durchgang für Flüssigkeiten und nicht zur Verspannung von Werkzeugen oder Werkstücken.

Um die nachteiligen Seitenkräfte zu vermindern oder zu beseitigen, ist das mittlere Befestigungsteil rohrförmig ausgebildet und in vorteilhafter Weise am Aussenumfang als Bajonettverschluss vorgesehen.

Die erfindungsgemässe Spannungsvorrichtung mit einem inneren und einem äusseren Spannfutter sowie mit einem rohrförmigen Fortsatz zur Verspannung des Halters mit dem/den Spannfuttern bietet eine hohe und präzise Genauigkeit bei extremer Belastung, insbesondere bei Hochgeschwindigkeitsfräsmaschinen, EDM oder andere Werkzeugmaschinen.

Der Halter kann mit dem inneren und/oder äusseren oder einem einzigen Spannfutter verspannbar sein.

Gemäss einer bevorzugten Ausführungsform weist das innere Spannfutter im Zentrum eine in Achsrichtung verlaufende durchgehende Öffnung auf.

Diese innere Durchgangsöffnung schafft genügend Raum für Spannelemente von Werkzeugen oder Werkstücken.

Weiterhin kann der Halter im Zentrum eine Durchgangsöffnung aufweisen, um die bei der Bearbeitung anfallenden Späne abzuführen.

Das innere Spannfutter als auch das äussere Spannfutter weist x - y - Referenzen und z - Referenzen auf, die mit entsprechenden Mitteln des Halters beim Verspannen zusammenwirken. Weiterhin können vorteilhaft die Mittel des Halters für die x-y-Referenzen als elastische innere und/oder äussere Zungenpaare ausgebildet sein.

Eine weitere vorteilhafte Ausgestaltung des Spannfutters besteht darin, dass der Halter als z-Referenzen innere und/oder äussere Kontaktflächen aufweist.

Gemäss einer bevorzugten Ausgestaltung des erfindungsgemässen Spannfutters weist der Halter einen rohrförmigen Fortsatz zur Verspannung mit dem inneren und/oder äusseren Spannfutter auf, wobei der Aussendurchmesser D des rohrförmigen Fortsatzes der Grössenordnung von dem Innendurchmesser der durchgehenden Öffnung bis zum Aussendurchmesser des inneren Spannfutters liegt.

Weiterhin kann der Durchmesser der zentralen Öffnung des rohrförmigen Fortsatzes im Bereich liegen oder mindestens halb so gross sein wie der Durchmesser, der durch den inneren Rand der inneren x-y Flächen gegeben ist.

Ebenso kann der Durchmesser der zentralen Öffnung im oberen Teil des Halters in der Grössenordnung des Durchmessers des rohrförmigen Fortsatzes liegen.

Die x-y-Referenzen des inneren Spannfutters können in derselben Höhe - in z-Richtung gesehen - wie die Flächen der x-y-Ebenen des äusseren Spannfutters angeordnet sein.

Die x-y-Referenzen und die z- Referenzen des äusseren Spannfutters liegen innerhalb zweier gedachter Kreise.

Der Halter ist in ansich bekannter Weise mit dem inneren und/oder äusseren Spannfutter oder einzelnen Spannfutter verspannbar.

Die Erfindung wird anhand von Ausführungsbeispielen im folgenden in Zeichnungen dargestellt. Es zeigen.
Fig.1 eine Schnittansicht einer Spannvorrichtung
Fig. 2 eine Draufsicht des Spannvorrichtung von Fig. 1
Fig. 3 einen Halter eines Spannfutters mit der Spannvorrichtung 1
Fig. 4 eine Schnittansicht der Spannvorrichtung von Fig. 1 mit eingespanntem Halter
Fig. 5 eine Draufsicht der Spannvorrichtung mit Halter von Fig. 4
Fig. 6 zwei verschiedenen Anwendungen für Halter
Fig. 7 eine erste Ausführungsform nach Fig. 6 in verspanntem Zustand
Fig. 8 eine Draufsicht nach Fig. 7
Fig. 9 eine zweite Ausführungsform nach Fig. 6 in verspanntem Zustand
Fig. 10 eine Draufsicht nach Fig. 9
Fig. 11 eine andere Ausführungsform eines Halters
Fig. 12 die Ausführungsform von Figur 11 im verspannten Zustand
Fig. 13 eine weitere Ausführungsform des Halters 19 mit Spannfutter bei der Bearbeitung eines Werkstückes.

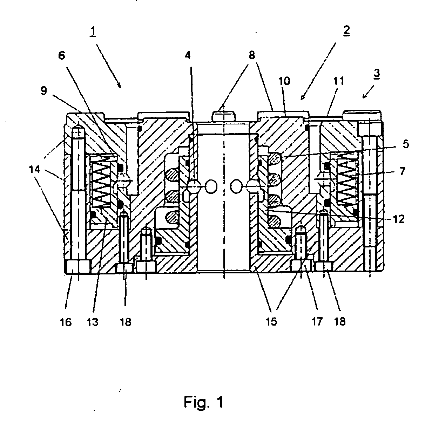

In Figur 1 ist eine mögliche Ausführungsform einer erfindungsgemässen Spannvorrichtung 1. Das innere Spannfutter 2 ist mittels der Schrauben 18 mit dem äusseren Spannfutter 3 fest verbunden, wobei das innere Spannfutter 2 konzentrisch zum äusseren Spannfutter 3 angeordnet. Der Grundkörper des inneren Spannfutters 2 besteht aus den Teilen 15, die mittels der Schrauben 17 zusammengehalten werden. Das innere Spannfutter 2 weist Spannkugeln 4, die mit einem inneren Spannkolben 12 und einer Spannfeder 5 in an sich bekannter Weise zusammenwirken. Entsprechend ist das äussere Spannfutter 3 aufgebaut. Der Grundkörper besteht aus den Teilen 14, die mittels der Schrauben 16 zusammengehalten werden. Es weist ebenfalls Spannkugeln 6, einen äusseren Spannkolben 13 und eine Spannfeder 7 auf. Die beiden Spannkolben 12, 13 können in bekannter Weise mittels Druckluft beaufschlagt werden. Sowohl das innere als auch das äussere Spannfutter 2, 3 besitzen sowohl innere 8 bzw. äussere 9 x-y Referenzen als auch innere 10 bzw. äussere 11 z Referenzen.

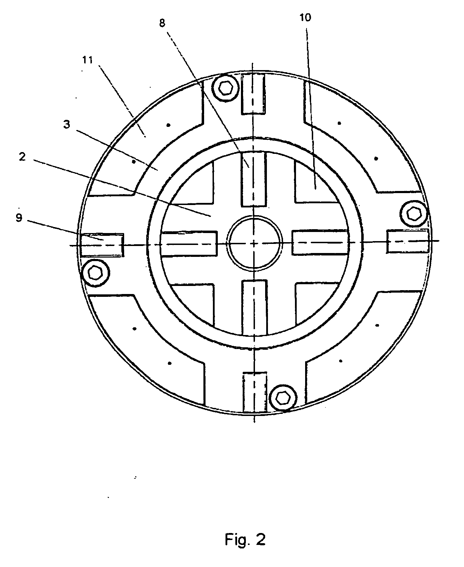

Die Anordnung der x-y bzw. z Referenzen 8, 9, 10, 11 sind in der Draufsicht in Figur 2 zu sehen. Die inneren x-y Referenzen 8 des inneren Spannfutters 2 und die äusseren x-y Referenzen 9 sind beispielsweise als Leisten mit konischen Kanten ausgebildet und die Mittellinien der inneren und äusseren x-y Referenzen stimmen mit höchster Genauigkeit überein. Zwischen den inneren x-y Referenzen 8 sind innere z Referenzen 10 vorgesehen. Entsprechend weist das äussere Spannfutter 3 umfangsseitig zwischen den äusseren x-y Referenzen 9 die z Referenzen 11 auf, wobei die Oberfläche der z Referenzen 10 und 11 die gleich Höhe aufweisen oder leicht versetzt sind.

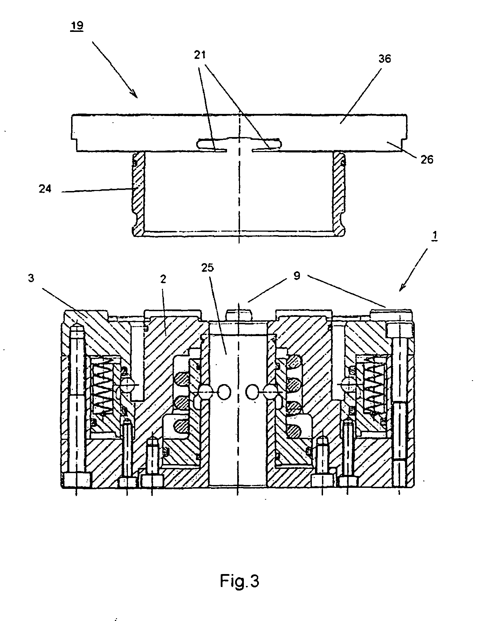

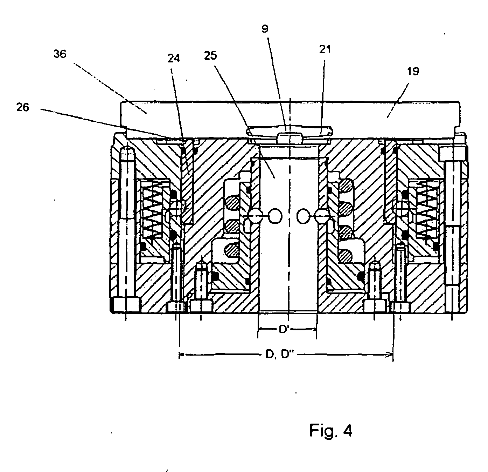

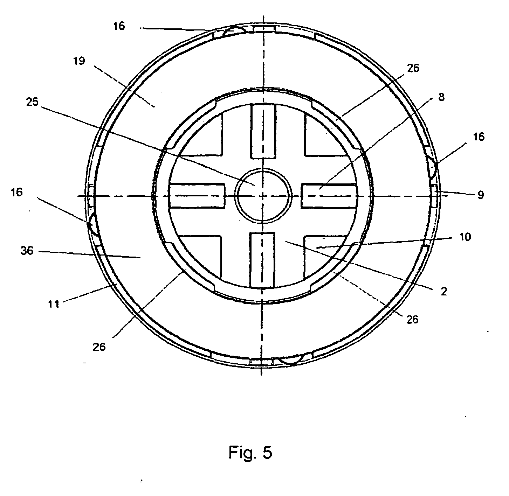

In Figur 3 ist das Spannvorrichtung 1 (wie in Figur 1 und 2 gezeigt) mit dem Halter 19 gezeigt, welches als Element für eine Platte dient. Der Halter 19 weist ein oberes Teil 36 und einen rohrförmigen Fortsatz 24 auf, wobei der obere Teil 36 mit dem rohrförmigen Fortsatz 24 mittels einer Bajonettverbindung 26 lösbar verbunden sind. Der Halter 19 ist mit der Spannvorrichtung 1 verspannbar26, wie es in den Figuren 4 und 5 gezeigt ist. Weiterhin sind im Halter 19 die äusseren Zungenpaare 21 zu sehen, die im verspannten Zustand mit den äusseren x-y Referenzen 9 zusammenwirken. Weiterhin ist die durchgehende Öffnung 25 des inneren Spannfutters 2 gezeigt. Der Durchmesser D des rohrförmigen Fortsatzes 24 liegt je nach Anwendung im Bereich des Durchmessers D' der durchgehenden Öffnung 25 bis zum Durchmesser D" des inneren Spannfutters 2, wie es in Figur 4 dargestellt ist.

Die Draufsicht in Figur 5 zeigt die Bajonettvorrichtung 26 des oberen Teils 36 mit dem rohrförmigen Fortsatz 19 des Halters 19. Die anderen Bezugszeichen entsprechen den Bezugszeichen der Figuren 1 bis 4.

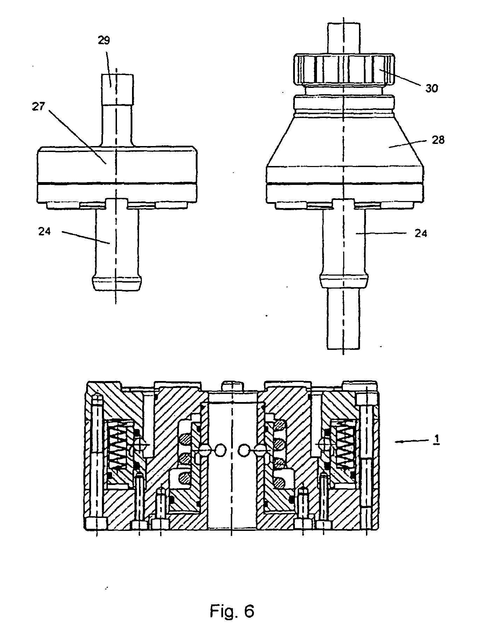

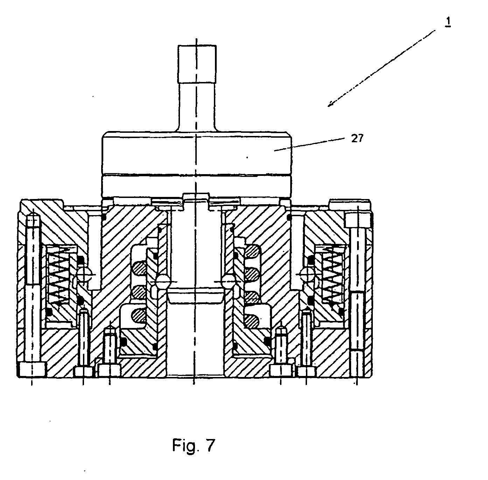

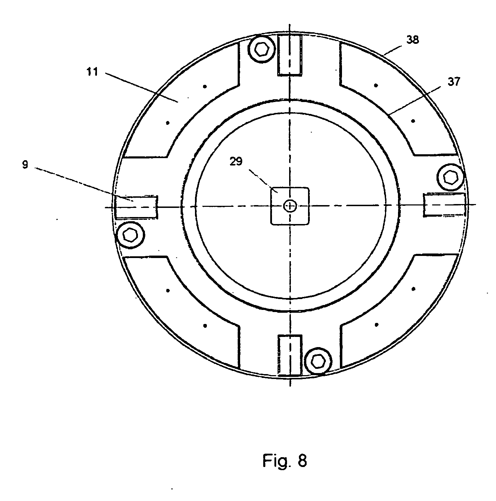

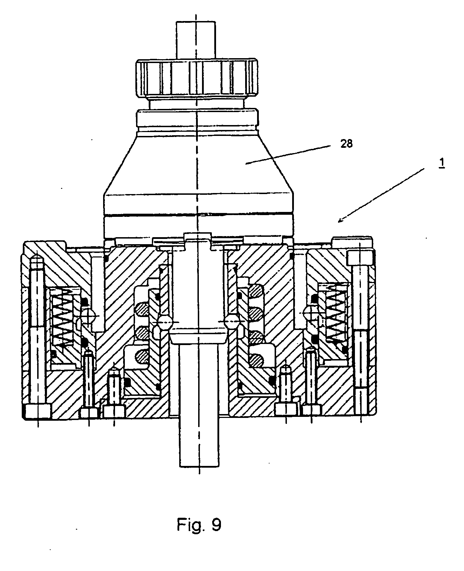

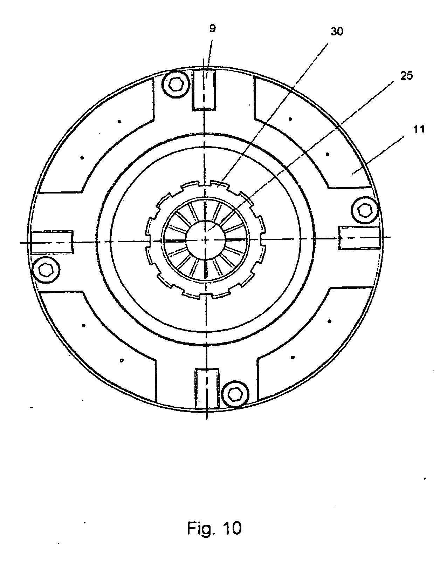

Die Figur 6 zeigt zwei Ausführungsformen von Haltern 27 und 28. Beide Halter 27 und 28 weisen jeweils einen lösbaren hohlen rohrförmigen Fortsatz 24 mit einem Durchmesser D auf, der in der Grössenordnung des Durchmessers D' der durchgehenden Öffnung 25 des inneren Spannfutters 2 liegt. Der Halter 27 besitzt einen gelötete oder geklebte Aufnahme 29. Der Halter 28 weist ein spezielles Spannfutter 30 auf. Die Figur 7 zeigt den Halter 27 im verspannten Zustand. Die Draufsicht ist in Figur 8 mit den x-y und z Referenzen zu sehen. Die x-y Referenzen 9 und die z-Referenzen 11 liegen zwischen zwei gedachten Kreisen 37 und 38. Der andere Halter 28 im verspannten Zustand macht die Figur 9 deutlich mit der Draufsicht in Figur 10.

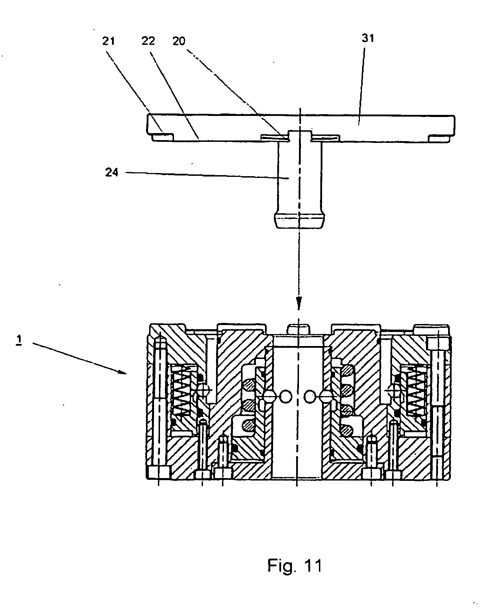

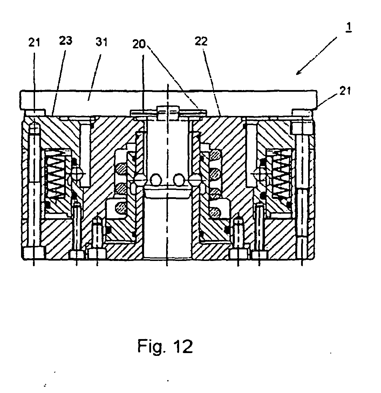

In Figur 11 ist die Seitenansicht eines Halters 31 für ein Palettenelement zu sehen. Insbesondere weist der Halter 31 innere und äussere Zungenpaare 20, 21, sowie innere und äussere Kontaktflächen 22 und 23 auf. Die Figur 12 zeigt den Halter 31 im eingespannten Zustand.

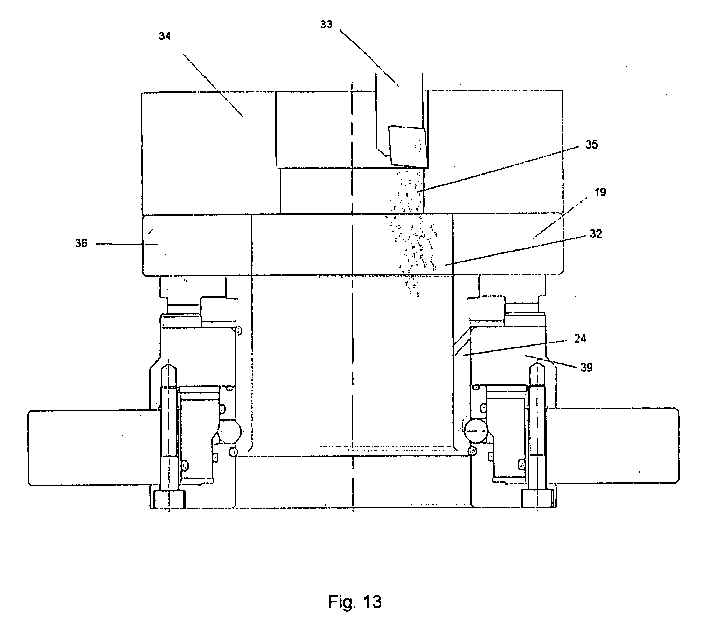

Die Figur 13 zeigt eine Ausführungsform eines Halters 19 eingespannt in ein Spannfutter 39. Das Werkstück 34 wird mittels des Werkzeuges 33 bearbeitet. Der Halter 19 weist eine Durchgangsöffnung 32 auf, deren Durchmesser in der Grössenordnung der Durchgangsöffnung des rohrförmigen Fortsatzes 24 des Halters 19 liegt. Die durchgehende Öffnung dient in dem Ausführungsbeispiel dazu, die bei der Bearbeitung anfallenden Späne 35 abzuführen.

### Bezugszeichenliste

- 1: Spannvorrichtung
- 2: inneres Spannfutter
- 3: äusseres Spannfutter
- 4: Kugeln
- 5: Spannfeder
- 6: Kugeln
- 7: Spannfeder
- 8: innere x-y-Referenzen
- 9: äussere x-y-Referenzen
- 10: innere z-Auflagen
- 11: äussere z-Auflagen
- 12: innerer Spannkolben
- 13: äusserer Spannkolben
- 14: Teil
- 15: Teil
- 16: Schraube
- 17: Schraube
- 18: Schraube
- 19: Halter
- 20: innere Zungenpaare
- 21: äussere Zungenpaare
- 22: innere Kontaktflächen
- 23: äussere Kontaktflächen
- 24: rohrförmiger Fortsatz
- 25: durchgehende Öffnung
- 26: Bajonettverbindung
- 27: Halter
- 28: Halter
- 29: Aufnahme
- 30: Spannfutter
- 31: Halter
- 32: Durchgangsöffnung
- 33: Werkzeug
- 34: Werkstück
- 35: Späne
- 36: oberer Teil
- 37: Kreis
- 38: Kreis
- 39: Spannfutter
- D: Aussendurchmesser von 24
- D': Innendurchmesser von 25
- D": Aussendurchmesser von 2

## Patentansprüche

1. Spannvorrichtung für ein Werkzeug oder ein Werkstück mit mindestens einem Spannfutter (2, 3) und mindestens einem Halter (19), wobei das Spannfutter (2, 3) x-y -Referenzen (8, 9), die mit der Unterfläche des Halters (19) zusammenwirken, aufweist, **dadurch gekennzeichnet, dass** der Halter (19) einen oberen Teil (36) und einen rohrförmigen Fortsatz (24) aufweist, wobei der obere Teil (36) mit dem rohrförmigen Fortsatz (24) lösbar verbunden ist,
dass die Spannvorrichtung ein inneres Spannfutter (2) und ein äusseres Spannfutter (3) aufweist, wobei das innere Spannfutter (2) mit dem äusseren Spannfutter (3) konzentrisch fest verbunden ist
dass die x-y -Referenzen (8, 9) des Halters (19) als elastische innere und/oder äussere Zungenpaare (20, 21) ausgebildet sind,
dass der Halter (19) einen rohrförmigen Fortsatz (24) zur Verspannung mit dem inneren und/oder äusseren Spannfutter (2, 3) aufweist, wobei der Aussendurchmesser D des rohrförmigen Fortsatzes (24) in der Grössenordnung von dem Innendurchmesser D' der durchgehenden Öffnung (25) bis zum Aussendurchmesser D" des inneren Spannfutters (2) liegt.

2. Spannvorrichtung nach Anspruch 1, **dadurch gekennzeichnet, dass** die lösbare Verbindung von dem oberen Teil (36) des Halters (19) mit dem rohrförmigen Fortsatz (24) eine Bajonettverbindung (26) ist.

3. Spannfutter nach Anspruch 1 oder 2, **dadurch gekennzeichnet, dass** der Halter (19) mit dem inneren Spannfutter (2) verspannbar ist.

4. Spannfutter nach Anspruch 1 oder 2, **dadurch gekennzeichnet, dass** der Halter (19) mit dem äusseren Spannfutter (3) verspannbar ist.

5. Spannfutter nach Anspruch 1 oder 2, **dadurch gekennzeichnet, dass** der Halter (19) zusammen mit dem inneren Spannfutter (2) und dem äusseren Spannfutter (3) verspannbar ist.

6. Spannfutter nach mindestens einem der vorherigen Ansprüche, **dadurch gekennzeichnet, dass** das innere Spannfutter (2) im Zentrum eine in Achsrichtung verlaufende durchgehende Öffnung (25) aufweist.

7. Spannfutter nach mindestens einem der vorherigen Ansprüche, **dadurch gekennzeichnet, dass** sowohl das innere Spannfutter (2) als auch das äussere Spannfutter (3) x - y - Referenzen (8, 9) und z - Referenzen (10, 11) aufweist, die mit entsprechenden Mitteln des Halters (19) beim Verspannen zusammenwirken.

8. Spannfutter nach mindestens einem der vorherigen Ansprüche, **dadurch gekennzeichnet, dass** der Halter (19) als z-Referenzen (10, 11) innere und/oder äussere Kontaktflächen (22, 23) aufweist.

9. Spannfutter nach mindestens einem der vorherigen Ansprüche, **dadurch gekennzeichnet, dass** die x-y-Referenzen des inneren Spannfutters (2) in derselben Höhe - in z-Richtung gesehen - wie die Flächen der x-y-Ebenen des äusseren. Spannfutters (3) angeordnet sind.

10. Spannfutter nach mindestens einem der vorherigen Ansprüche, **dadurch gekennzeichnet, dass** der Halter (19) im Zentrum eine durchgehende Öffnung (32) aufweist, wobei der Durchmesser der Öffnung (32) in der Grössenordnung des Durchmessers der Öffnung des rohrförmigen Fortsatzes (24) liegt.

## Claims

1. Clamping device for a tool or a workpiece, comprising at least one chuck (2, 3) and at least one holder (19), wherein the chuck (2, 3) has x-y references (8, 9), which cooperate with the bottom face of the holder (19), **characterized in that** the holder (19) has an upper part (36) and a tubular extension (24), the upper part (36) being detachably connected to the tubular extension (24), **in that** the clamping device has an inner chuck (2) and an outer chuck (3), the inner chuck (2) being fixedly connected concentrically to the outer chuck (3),
**in that** the x-y references (8, 9) of the holder (19) are configured as elastic inner and/or outer tongue pairs (20, 21),
**in that** the holder (19) has a tubular extension (24) for clamping to the inner and/or outer chuck (2, 3), the external diameter D of the tubular extension (24) lying in the order of magnitude of the internal diameter D' of the continuous opening (25) up to the external diameter D" of the inner chuck (2).

2. Clamping device according to Claim 1, **characterized in that** the detachable connection of the upper part (36) of the holder (19) to the tubular extension (24) is a bayonet connection (26).

3. Chuck according to Claim 1 or 2, **characterized in that** the holder (19) can be clamped to the inner chuck (2).

4. Chuck according to Claim 1 or 2, **characterized in that** the holder (19) can be clamped to the outer chuck (3).

5. Chuck according to Claim 1 or 2, **characterized in that** the holder (19) can be clamped to the inner chuck (2) and the outer chuck (3).

6. Chuck according to at least one of the previous claims, **characterized in that** the inner chuck (2) has in the centre a continuous opening (25) running in the axial direction.

7. Chuck according to at least one of the previous claims, **characterized in that** both the inner chuck (2) and the outer chuck (3) have x-y references (8, 9) and z references (10, 11), which, in the clamping operation, cooperate with corresponding means of the holder (19).

8. Chuck according to at least one of the previous claims, **characterized in that** the holder (19) has as z references (10, 11) inner and/or outer contact surfaces (22, 23).

9. Chuck according to at least one of the previous claims, **characterized in that** the x-y references of the inner chuck (2) are disposed at the same height - viewed in the z direction - as the surfaces of the x-y planes of the outer chuck (3).

10. Chuck according to at least one of the previous claims, **characterized in that** the holder (19) has in the centre a continuous opening (32), the diameter of the opening (32) lying in the order of magnitude of the diameter of the opening of the tubular extension (24).

## Revendications

1. Dispositif de serrage pour un outil ou bien une pièce à usiner, avec au moins un mandrin de serrage (2, 3) et au moins un support (19), le mandrin de serrage (2, 3) comportant des références x-y (8, 9) coopérant avec la surface inférieure du support (19), **caractérisé en ce que** le support (19) comporte une partie supérieure (36) et un prolongement tubulaire (24), la partie supérieure (36) étant reliée de façon amovible avec le prolongement tubulaire (24),
**en ce que** le dispositif de serrage comporte un mandrin de serrage intérieur (2) et un mandrin de serrage extérieur (3), le mandrin de serrage intérieur (2) étant relié solidement et de façon concentrique avec le mandrin de serrage extérieur (3),
**en ce que** les références x-y (8, 9) du support (19) sont conçues comme des paires de langues (20, 21) élastiques intérieures et/ou extérieures,
**en ce que** le support (19) comporte un prolongement tubulaire (24) destiné au serrage avec le mandrin de serrage intérieur et/ou extérieur (2, 3), le diamètre extérieur D du prolongement tubulaire (24) étant compris entre le diamètre intérieur D' de l'ouverture de passage (25) et le diamètre extérieur D" du mandrin de serrage intérieur (2).

2. Dispositif de serrage selon la revendication 1, **caractérisé en ce que** l'assemblage amovible entre la partie du haut (36) du support (19) et le prolongement tubulaire (24) est un assemblage à baïonnette (26).

3. Mandrin de serrage selon la revendication 1 ou 2, **caractérisé en ce que** le support (19) peut être assemblé par serrage avec le mandrin de serrage intérieur (2).

4. Mandrin de serrage selon la revendication 1 ou 2, **caractérisé en ce que** le support (19) peut être assemblé par serrage avec le mandrin de serrage extérieur (3).

5. Mandrin de serrage selon la revendication 1 ou 2, **caractérisé en ce que** le support (19) peut être assemblé par serrage avec le mandrin de serrage intérieur (2) et avec le mandrin de serrage extérieur (3).

6. Mandrin de serrage selon l'une au moins des revendications précédentes, **caractérisé en ce que** le mandrin de serrage intérieur (2) comporte en son centre une ouverture de passage (25) s'étendant dans le sens de l'axe.

7. Mandrin de serrage selon l'une au moins des revendications précédentes, **caractérisé en ce qu'**aussi bien le mandrin de serrage intérieur (2) que le mandrin de serrage extérieur (3) comportent des références x-y (8, 9) et des références z (10, 11), qui coopèrent avec des moyens correspondants du support (19) pendant le serrage.

8. Mandrin de serrage selon l'une au moins des revendications précédentes, **caractérisé en ce que** le support (19) comporte des surfaces de contact (22, 23) intérieures et/ou extérieures en tant que références z (10, 11).

9. Mandrin de serrage selon l'une au moins des revendications précédentes, **caractérisé en ce que** les références x-y du mandrin de serrage intérieur (2) sont disposées à la même hauteur que les surfaces des régions x-y du mandrin de serrage extérieur (3), vu dans la direction z.

10. Mandrin de serrage selon l'une au moins des revendications précédentes, **caractérisé en ce que** le support (19) comporte une ouverture de passage (32) en son centre, le diamètre de l'ouverture (32) étant de l'ordre du diamètre de l'ouverture du prolongement tubulaire (24).
